# EUROPÄISCHE PATENTSCHRIFT

(11) **EP 0 354 337 B1**
(45) Veröffentlichungstag und Bekanntmachung des Hinweises auf die Patenterteilung: **12.10.1994**
(21) Anmeldenummer: 89111846.5
(22) Anmeldetag: 29.06.1989
(51) Int. Cl.: C14C 1/02

(54) **Konservieren von Tierhäuten**
Animal skin preservation
Conservation de peaux d'animaux

(30) Priorität: 12.08.1988 DE 3827382
(43) Veröffentlichungstag der Anmeldung: 14.02.1990
(73) Patentinhaber: MESSER GRIESHEIM GMBH, D-60547 Frankfurt (DE)
(72) Erfinder: Endlweber, Hans, A-1170 Wien (AT)

(56) Entgegenhaltungen:
- FR-A- 2 552 306
- US-A- 4 206 616
- JALCA, Band 72, Nr. 9, September 1977, Seiten 334-339; D.G. BAILEY et al.:"Cattlehide preservation with sodium sulfite and acetic acid"

## Beschreibung

Die vom Tierkörper abgezogene "grüne" Haut wird nur selten sofort in der Lederfabrik verarbeitet. Sammeln, Sortieren nach Gewichtsklassen, Zusammenstellen der "Lose" und Transport zur Lederfabrik benötigen zumindest einige Tage, oft Wochen oder gar Monate. Ungegerbte Haut ist infolge ihres Aufbaus aus Eiweiß im natürlichen nassen Zustand eine Brutstätte für Bakterien. Um sie vor Fäulnisschäden zu bewahren, muß sie konserviert werden.

Um den Abbau von Hautssubstanz durch Fäulnisbakterien zu unterbinden, ist es am einfachsten, den Wassergehalt der Haut ausreichend zu vermindern. In tropischen Ländern werden die Häute an der Luft getrocknet. Das erfordert viel Platz und ist nur bei Häuteanfall in kleiner Stückzahl durchführbar.

Meist wird mit Kochsalz konserviert, indem die von Blut und anhaftendem Dung gereinigten Häute entweder mit festem Salz bestreut oder etwa 24 h lang in eine gesättigte Salzlake eingelegt werden. Nach der Salzbehandlung werden sie, damit die überschüssige Salzlake abfließen kann, auf schräger Unterlage gestapelt und danach zu Paketen zusammengelegt. Der Wasser-Gehalt der Häute geht durch die Salzkonservierung von ca. 65% auf ca. 40% zurück.

Beim Verarbeiten der konservierten Häute in der Lederfabrik wird das Konservierungssalz mit dem Abwasser abgeführt, was eine erhebliche Wasserverschmutzung verursacht.

Es wurde daher auch schon eine Konservierung mit Natriumsulfid und Essigsäure in wäßriger Lösung versucht. Die antimikrobe Wirkung war aber nicht zufriedenstellend.

Aufgabe der Erfindung ist ein Konservierungsverfahren, das umweltfreundlich ist und eine bakterielle und enzymatische Zersetzung der Häute verhindert.

Gemäß der Erfindung wird hierzu vorgeschlagen die Häute nach dem Abziehen umgehend mit CO₂ zu behandeln. Besonders vorteilhaft geschieht dies in der Weise, daß die Häute nach dem Abziehen umgehend schockgekühlt und danach in CO₂ Atmosphäre gelagert werden.

Die Schockkühlung erfolgt bevorzugt mit CO₂-Schnee, der eine Temperatur von ca. -79°C aufweist. Bei ansteigender Temperatur verdampft das CO₂ und kann ganz oder teilweise als Lagergas verwendet werden.

Eine Möglichkeit der Lagerung besteht darin, daß die Häute nach Gewicht sortiert in Container gelegt werden und vorzugsweise jede Haut mit CO₂-Schnee bestreut wird. Nach dem Füllen des Behälters wird dieser geschlossen. Zwecks Sicherheit gegen Überdruck muß dieser mit einer Sicherheitseinrichtung versehen sein.

In kleineren Schlachthöfen werden die Häute zunächst unsortiert in Container gelegt und mit CO₂-Schnee bestreut. Sind ausreichend Häute vorhanden werden diese später in einzelne Container sortiert, die dann mit CO₂-Gas gefüllt werden.

In beiden Fällen ist es von Vorteil, solange CO₂ in den Behälter einzublasen bis der O₂-Gehalt <1% ist. Hierdurch wird eine lange Lagerstabilität erreicht.

Als Behälter werden vorzugsweise Kunststoff-Container mit einer Innengröße von ca. 1-1,5m³ verwendet.Bei einer Aufbewahrung der Container in einem Kühlhaus kann die Temperatur im Behälter lange niedrig gehalten werden.

## Patentansprüche

1. Verfahren zum Konservieren von Tierhäuten,
dadurch gekennzeichnet,
daß die Häute nach dem Abziehen umgehend mit CO₂ behandelt werden.

2. Verfahren nach Anspruch 1,
dadurch gekennzeichnet,
daß die Häute nach dem Abziehen schockgekühlt und danach in CO₂-Atmosphäre gelagert werden.

3. Verfahren nach Anspruch 2,
dadurch gekennzeichnet,
daß die Schockkühlung mit CO₂-Schnee erfolgt.

4. Verfahren nach einem der Ansprüche 1 bis 3,
dadurch gekennzeichnet,
daß die Lagerung der Häute in Kunststoff-Containern erfolgt.

5. Verfahren nach Anspruch 1,
dadurch gekennzeichnet,
daß die Häute in einen Container gelegt werden und die darin befindliche Atmosphäre nach dem Verschließen durch CO₂ verdrängt wird bis ein O₂ Gehalt <1% erreicht ist.

6. Verfahren nach Anspruch 3,
dadurch gekennzeichnet,
daß die Container in einem Kühlhaus aufbewahrt werden.

## Claims

1. Process for preserving animal skins, characterized in that immediately after being skinned the skins are treated with CO₂.

2. Process according to claim 1, characterized in that after being skinned the skins are shock-cooled and then stored in a CO₂ atmosphere.

3. Process according to claim 2, characterized in that the shock-cooling is effected using CO₂ snow.

4. Process according to any one of claims 1 to 3, characterized in that the skins are stored in plastics containers.

5. Process according to claim 1, characterized in that the skins are placed in a container and that once the container has been sealed the atmosphere therein is displaced by CO₂ until an O₂ content < 1 % is reached.

6. Process according to claim 3, characterized in that the containers are kept in a cold store.

## Revendications

1. Procédé de conservation de peaux d'animaux, caractérisé en ce qu'après dépeçage, on traite immédiatement les peaux avec du gaz CO₂.

2. Procédé selon la revendication 1, caractérisé en ce qu'après dépeçage, on trempe les peaux (refroidissement brutal) puis on les stocke dans une atmosphère de gaz CO₂.

3. Procédé selon la revendication 2, caractérisé en ce qu'on trempe avec de la neige carbonique.

4. Procédé selon l'une revendications 1 à 3, caractérisé en ce que le stockage des peaux se fait dans des containers en matière plastique.

5. Procédé selon la revendication 1, caractérisé en ce que l'on place les peaux dans un container et on évacue l'atmosphère du container après l'avoir fermés, avec du gaz CO₂ jusqu'à arriver à une teneur en gaz CO₂ inférieure à 1 %.

6. Procédé selon la revendication 3, caractérisé en ce qu'on stocke les containers dans une chambre froide.
